# EUROPÄISCHE PATENTSCHRIFT

(11) **EP 0 891 837 B1**
(45) Veröffentlichungstag und Bekanntmachung des Hinweises auf die Patenterteilung: **17.10.2001**
(21) Anmeldenummer: 98113374.7
(22) Anmeldetag: 17.07.1998
(51) Int. Cl.: B23K 35/30, C22C 5/08

(54) **Verwendung von Silber/Kupfer/Palladium-Hartloten**
Use of silver/copper/palladium brazing alloys
Utilisation des brasages forts d'argent/cuivre/palladium

(30) Priorität: 18.07.1997 EP 97112352
(43) Veröffentlichungstag der Anmeldung: 20.01.1999
(73) Patentinhaber: Endress + Hauser Flowtec AG, CH-4153 Reinach BL 1 (CH)
(72) Erfinder: Lorenz, Rainer, 79540 Lörrach (DE)
(74) Vertreter: Morstadt, Volker, Dipl.-Ing.

(56) Entgegenhaltungen:
- EP-A- 0 104 500
- US-A- 3 264 728
- US-A- 5 129 574
- PEASLEE R L: "BRAZING Q & A" WELDING JOURNAL INCLUDING: WELDING RESEARCH, Bd. 70, Nr. 5, 1. Mai 1991, Seite 112 XP000256550
- KELLER D L ET AL: "WETTABILITY OF BRAZING FILLER METALS" WELDING JOURNAL INCLUDING: WELDING RESEARCH, Bd. 69, Nr. 10, 1. Oktober 1990, Seiten 31-34, XP000175368

## Beschreibung

Die Erfindung beschäftigt sich mit einer neuartigen Verwendung von Silber/Kupfer/Palladium-Hartloten.

Derartige Hartlote sind marktgängig, vgl. "Welding Journal", Oktober 1990, Seiten 31 bis 34, worin unter vielen anderen Hartloten, deren Fähigkeit, 316L-Stahl zu benetzen, untersucht wird, ein mit "Palcusil 5" bezeichnetes 68Ag-27Cu-5Pd-Hartlot, ein mit "Palcusil 10" bezeichnetes 58Ag-32Cu-10Pd-Hartlot, ein mit "Palcusil 15" bezeichnetes 65Ag-20Cu-15Pd-Hartlot und ein mit "Palcusil 25" bezeichnetes 54Ag-21Cu-25Pd-Hartlot beschrieben.

Diese Silber/Kupfer/Palladium-Hartlote können somit, da sie nichtrostenden Stahl gut benetzen, zum Hartlöten von Komponenten aus diesem Material untereinander dienen. Aber auch Komponenten aus Titan können untereinander mit diesen Silber/Kupfer/Palladium-Hartloten hartgelötet werden.

Bei der Untersuchung, wie eine Komponente aus Titan mit einer Komponente aus nichtrostendem Stahl direkt hartgelötet werden kann, also ohne zuvor eine Zwischenschicht aus einem weiteren Metall auf den Stahl, z.B. Nickel auf 304L-Stahl, vgl. "Welding Journal", Mai 1991, Seite 112, aufbringen zu müssen, erkannte der Erfinder zunächst nur, daß die Lötstelle bei flächigem Hartverlöten der beiden Komponenten nach dem Erkalten brüchig ist.

Dies ist auf die doch recht unterschiedlichen thermischen Ausdehnungskoeffizienten dieser beiden Materialien zurückzuführen; der Ausdehnungskoeffizient von Stahl ist um einiges größer als der von Titan.

Überraschenderweise lassen sich jedoch die bisher nur für das Hartverlöten von Komponenten aus demselben Material propagierten Silber/Kupfer/Palladium-Hartlote auch für das direkte Hartverlöten von Titan mit rostfreiem Stahl sehr gut verwenden, wenn entsprechend einem Merkmal der Erfindung die zweite Komponente aus nichtrostendem Stahl die erste Komponente aus Titan umspannt, so daß die erkaltete Lötstelle unter dauernder Druckspannung steht.

Die Erfindung besteht daher entsprechend einer ersten Variante in der Verwendung von Silber/Kupfer/Palladium-Hartloten zum direkten Hartverlöten einer ersten Komponente aus Titan mit einer zweiten Komponente aus nichtrostendem Stahl, die die erste Komponente umspannt.

Die Erfindung besteht ferner entsprechend einer zweiten Variante in einem Verfahren zum Herstellen einer Verbundanordnung durch direktes Hartverlöten einer ersten Komponente aus Titan mit einer zweiten Komponente aus nichtrostendem Stahl, die die erste Komponente umspannt, unter Verwendung von Silber/Kupfer/Palladium-Hartloten, bei welchem Verfahren
- die erste Komponente aus Titan mit einem zylindrischen ersten Ende versehen wird,
   -- das einen kleineren Außendurchmesser als ein daran anschließender Hauptteil hat,
      --- dessen Mantelfläche mindestens teilweise eine hartzuverlötende erste Fläche ist,
- als zweite Komponente eine zylindrische Stahlhülse dient,
   -- deren Innendurchmesser gleich dem Außendurchmesser des Hauptteils der ersten Komponente ist und,
   -- deren Innenmantelfläche mindestens teilweise eine hartzuverlötende zweite Fläche ist,
- eine Silber/Kupfer/Palladium-Hartlotmenge um das erste Ende der ersten Komponente gelegt wird,
- die Stahlhülse auf den Hauptteil der ersten Komponente aufgeschoben wird,
- die erste und die zweite Komponente sowie die Silber/Kupfer/Palladium-Hartlotmenge in einem Vakuum, einem Schutzgas oder einem Inertgas solange erhitzt werden, bis die Silber/Kupfer/Palladium-Hartlotmenge schmilzt und die hartzuverlötenden Flächen benetzt, und danach erkalten gelassen werden,
   -- wodurch die Verbundanordnung entsteht.

Eine erste bevorzugte Weiterbildung der zweiten Variante der Erfindung besteht in einem Verfahren, bei dem
- die Stahlhülse ein über das erste Ende der ersten Komponente aus Titan vorstehendes Ende aufweist,
- die erste Komponente am ersten Ende ein Sack-Innengewinde aufweist,
- ein Rohr aus nichtrostendem Stahl,
   -- das einen gleichen Außendurchmesser wie der Innendurchmesser der Stahlhülse hat,
- an einem ersten Ende mit einem in das Sack-Innengewinde passenden Außengewinde versehen und darin eingeschraubt wird, und
- das vorstehende Ende der Stahlhülse wird mit dem Rohr verschweißt.

Eine zweite bevorzugte Weiterbildung der zweiten Variante der Erfindung, die auch zusammen mit deren erster Weiterbildung angewendet werden kann, besteht in einem Verfahren, bei dem der Hauptteil der ersten Komponente aus Titan mit einem vom ersten Ende abgewandten Bund versehen wird, den die Stahlhülse überdeckt und der als Anschlag für sie dient.

Eine dritte bevorzugte Weiterbildung der zweiten Variante der Erfindung, die auch bei deren erster und/oder zweiter Weiterbildung anwendbar ist, besteht in einem Verfahren, bei dem
- die erste Komponente aus Titan mit einer Axialbohrung versehen wird, deren Durchmesser gleich dem Innendurchmesser des Rohrs aus nichtrostendem Stahl ist,
- ein Titanrohr, dessen Außendurchmesser praktisch gleich dem Innendurchmesser des Rohrs ist, in das Rohr und in die Axialbohrung eingesteckt wird und
- das Titanrohr mit der ersten Komponente unter einem Schutzgas elektrisch verschweißt wird.

Eine bevorzugte Ausgestaltung der ersten oder der zweiten Variante der Erfindung, die auch bei deren obigen Weiterbildungen anwendbar ist, besteht in der Verwendung einer möglichst rückstandfreien Zusammensetzung von 68,5 Gew.% Silber, 26,5 Gew.% Kupfer und 5 Gew.% Palladium.

Die Erfindung wird nun anhand der Figuren der Zeichnung näher erläutert, in denen in Form von Längsschnitten schematisch Ausführungsbeispiele dargestellt sind, wobei gleiche Teile mit denselben Bezugszeichen versehen sind. Diese sind in einer auf eine Figur mit deren erstmaliger Erwähnung folgenden Figur nicht mehr eingezeichnet.
- Fig. 1 zeigt: eine nach der zweiten Variante der Erfindung hergestellte Verbundanordnung,
- Fig. 2 zeigt: eine nach der obigen ersten Weiterbildung hergestellte Verbundanordnung,
- Fig. 3 zeigt: eine nach der obigen dritten Weiterbildung hergestellte Verbundanordnung,
- Fig. 4 zeigt: eine nach der obigen zweiten und dritten Weiterbildung hergestellte Verbundanordnung, und
- Fig. 5 zeigt: die Anwendung der zweiten Variante der Erfindung bei einem Einrohr-Coriolis-Massedurchflußaufnehmer.

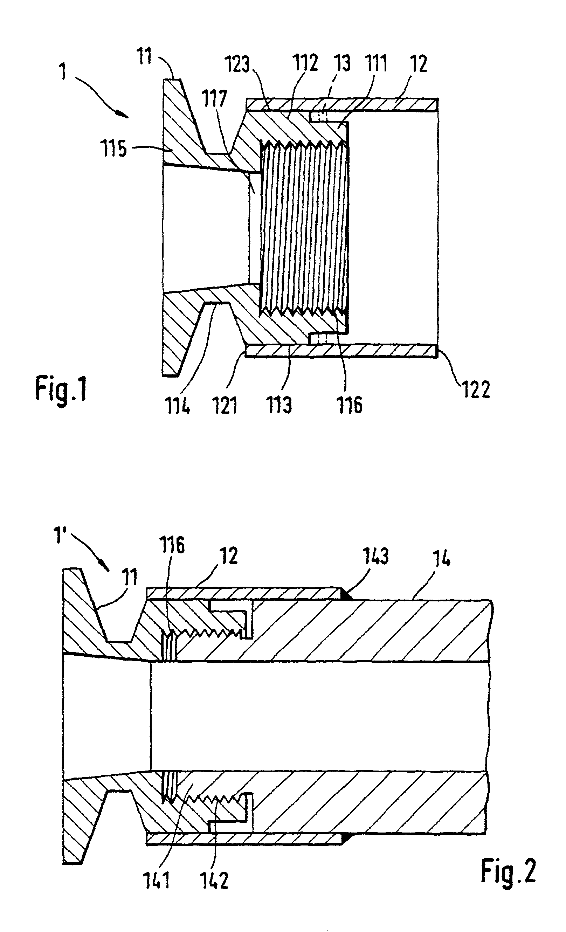

In Fig. 1 ist im Schnitt eine Verbundanordnung 1 einer ersten Komponente 11 aus Titan mit einer zweiten Komponente aus nichtrostendem Stahl gezeigt. Die Verbundanordnung 1 ist entsprechend der zweiten Variante der Erfindung durch Hartverlöten mit einem Silber/Kupfer/Palladium-Hartlot hergestellt worden.

Bei diesem Herstellen ist die Komponente 11 mit einem zylindrischen ersten Ende 111 versehen worden, das einen kleineren Außendurchmesser als ein daran anschließender Hauptteil 112 hat. Dessen Mantelfläche 113 ist mindestens teilweise eine hartzuverlötende erste Fläche; in Fig. 1 ist dies die gesamte Mantelfläche 113. An den Hauptteil schließt sich über eine Einschnürung 114 einstückig ein Flansch 115 an.

Die Komponente 11 ist an ihrem Ende 111 auch mit einem Sack-Innengewinde 116 versehen worden, das bis in den Hauptteil 112 hineinreicht. Vom Ende 111 her ist die Komponente 11 noch mit einer Axialbohrung 117 versehen worden; deren Funktion, und die des Flansches 115 und die des Sack-Innengewindes 116 werden unten noch näher erläutert.

Als zweite Komponente dient eine zylindrische Stahlhülse 12, deren Innendurchmesser dem Außendurchmesser des Hauptteils 112 der Komponente 11 gleich ist und deren Innenmantelfläche 123 mindestens teilweise eine hartzuverlötende zweite Fläche ist; in Fig. 1 ist dies die die Mantelfläche 113 der Komponente 11 berührende Fläche.

Ein erstes Ende 121 der Stahlhülse 12 endet am Beginn der Einschnürung 114, während ein zweites Ende 122 von ihr über das Ende der Komponente 11 vorsteht. Dies ist keinesfalls zwingend: Die Stahlhülse 12 kann auch bündig mit dem Ende 111 sein oder gegenüber diesem zurückspringen.

Beim Herstellen wird die Stahlhülse 12 auf den Hauptteil 112 der Komponente 11 aufgeschoben, d.h. der erwähnte Außendurchmesser ist geringfügig kleiner als der erwähnte Innendurchmesser, so daß ein leichtes Aufschieben möglich ist. Somit umgreift die Stahlhülse 12 in diesem Zustand die Komponente 11, ohne sie vorerst zu umspannen.

Nach dem Aufschieben wird eine Silber/Kupfer/Palladium-Hartlotmenge 13 um das erste Ende 111 der Komponente 11 gelegt, wie gestrichelt angedeutet ist. Die Hartlotmenge 13 wird so bemessen, daß sie zum Verlöten der vorgesehenen Lötfläche der beiden Mantelflächen 113, 123 ausreicht. Als Hartlotmenge 13 kann ein bereits vorgefertigter Silber/Kupfer/Palladium-Draht, ein entsprechendes Band oder eine entsprechende Paste dienen.

Als besonders geeignetes Silber/Kupfer/Palladium-Hartlot hat sich eine möglichst rückstandfreie Zusammensetzung von 68,5 Gew.% Silber, 26,5 Gew.% Kupfer und 5 Gew.% Palladium bewährt.

Nun wird die Anordnung aus der Komponente 11, der Stahlhülse 12 und der Silber/Kupfer/Palladium-Hartlotmenge 13 in einem Vakuum, einem Schutzgas oder einem Inertgas erhitzt, da Titan bei erhitzen schnell oxydiert, und zwar solange, bis die Hartlotmenge schmilzt und in den Spalt zwischen den hartzuverlötenden Flächen eindringt und diese möglichst vollständig benetzt. Danach wird erkalten gelassen, wodurch nun die Stahlhülse 12 die Komponente 11 umspannt und die Verbundanordnung 1 hergestellt worden bzw. entstanden ist.

In Fig. 2 ist im Schnitt eine nach einer Weiterbildung des anhand der Fig. 1 erläuterten Verfahrens hergestellte Verbundanordnung 1' dargestellt. In das Sack-Innengewinde 116 ist ein Rohr 14 aus nichtrostendem Stahl eingeschraubt worden, das an einem ersten Ende 141 mit einem in das Sack-Innengewinde 116 passenden Außengewinde 142 versehen wurde.

Das Rohr 14 hat einen Außendurchmesser, der gleich dem Innendurchmesser der Stahlhülse 12 ist. Das vorstehende Ende 122 der Stahlhülse 12 ist mit dem Rohr 14 verschweißt worden, wie durch eine entsprechende Schweißnaht 143 veranschaulicht ist.

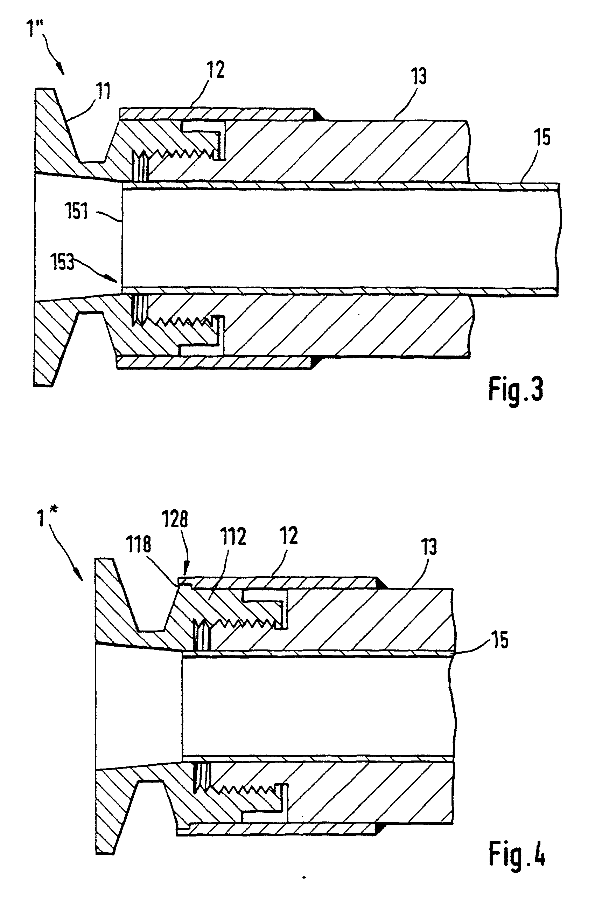

In Fig. 3 ist im Schnitt eine nach einer anderen Weiterbildung des anhand der Fig. 1 und 2 erläuterten Verfahrens hergestellte Verbundanordnung 1" dargestellt. In die oben bereits kurz erwähnte Axialbohrung 117 ist ein Titanrohr 15 eingesteckt worden, dessen Außendurchmesser praktisch gleich dem Innendurchmesser des Rohrs 14 ist. Ein erstes Ende 151 des Titanrohrs 15 wurde mit der Komponente 11 unter einem Schutzgas bei 153 elektrisch verschweißt.

In Fig. 4 ist im Schnitt eine nach noch einer anderen Weiterbildung des anhand der Fig. 1 bis 3 erläuterten Verfahrens hergestellte Verbundanordnung 1* dargestellt. Der Hauptteil 112 der Komponente 11 aus Titan ist mit einem vom ersten Ende 111 abgewandten Bund 118 versehen worden, den die Stahlhülse 12 überdeckt und der als Anschlag für sie dient. Hierzu ist die Stahlhülse 12 mit einer zum Bund 118 passenden Eindrehung 128 versehen worden.

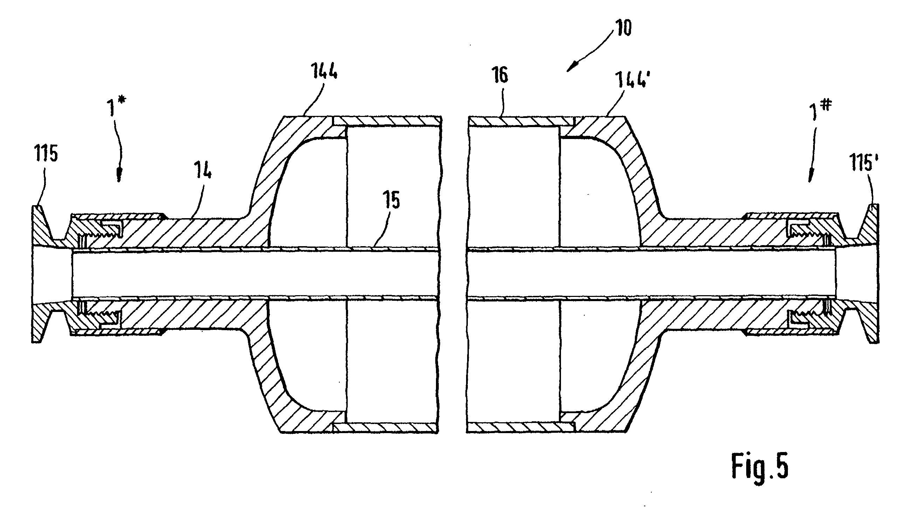

In Fig. 5 ist im Schnitt ein Einrohr-Coriolis-Massedurchflußaufnehmer 10 dargestellt, bei dem die zweite Variante der Erfindung nach den Fig. 1 bis 4 mit Vorteil zweimal angewendet worden ist. Das Rohr 14 der Verbundanordnung 1* geht nahtlos in einen trichterartigen Endteil 144 über, der einen größeren Durchmesser als das Rohr 14 hat.

Eine mit der Verbundanordnung 1* identische, jedoch spiegelbildlich zu ihr liegende Verbundanordnung 1^{#} hat ein trichterartiges Endteil 144'. Die beiden Endteile 144, 144' sind durch ein Trägerrohr 16 miteinander mechanisch fest verbunden, z.B. jeweils rundum miteinander verschweißt. Hierzu sind die Endteile 144, 144', z.B. wie gezeichnet, so ausgebildet, daß das Trägerrohr 16 vor dem Verbinden auf sie aufgesteckt werden kann und die Mantelflächen der Endteile 144, 144' stufenlos in die Mantelfläche des Trägerrohrs 16 übergehen.

Der gegenüber dem Durchmesser des Rohrs 14 größere Durchmesser des Endteils 144 ist so gewählt, daß der dadurch gebildete Hohlraum dazu dienen kann, am Titanrohr 15 eine Erregeranordnung und Sensoren etc. anzubringen. Diese sind zwar für die Funktion als Coriolis-Massedurchflußaufnehmer bekanntlich erforderlich, sind jedoch in Fig. 5 aus Gründen der Übersichtlichkeit weggelassen.

Durch Anwendung der Erfindung bei einem Einrohr-Coriolis-Massedurchflußaufnehmer, der, wie üblich und in Fig. 5 gezeigt, mit dem Titanrohr 15 als schwingendem Meßrohr versehen ist, läßt sich eine sehr gute mechanische Verbindung zwischen dem Trägerrohr 16 aus nichtrostendem Stahl und dem Flansch 115 aus Titan sowie eine sehr gute mechanische Verbindung zwischen dem Titanrohr 15 und dem Flansch 115 erzielen.

Diese mechanischen Verbindungen Titan/Titan bzw. Titan/Stahl sind nämlich erforderlich, da sowohl der Material-Übergang vom Titanrohr 15 zum (Titan)Flansch 115 als auch der Material-Übergang vom Stahlrohr 14 zum (Titan)Flansch 15 bei allen vor Ort auftretenden Betriebsbedingungen, insb. Temperaturwechseln, unbedingt dicht bleiben müssen. Dies ist gewährleistet, da die maximal zugelassene Betriebstemperatur des Coriolis-Massedurchflußaufnehmers 10 weit unterhalb der Temperatur des oben erläuterten Hartlötens liegt.

Mittels des Flansches 115 und eines entsprechenden Flansches 115' an der Verbundanordnung 1^{#} läßt sich der Einrohr-Coriolis-Massedurchflußaufnehmer 10 in eine Rohrleitung einbauen und damit fluiddicht verbinden, in der vor Ort das zu messende Fluid strömt.

Die Erfindung kann besonders vorteilhaft bei einem Einrohr-Coriolis-Massedurchflußaufnehmer mit einer Auslegermasse angewendet werden, wie er in der älteren EP-A 849 568 beschrieben ist.

## Patentansprüche

1. Verwendung von Silber/Kupfer/Palladium-Hartloten zum direkten Hartverlöten einer ersten Komponente aus Titan mit einer zweiten Komponente aus nichtrostendem Stahl, die die erste Komponente umspannt.

2. Verwendung nach Anspruch 1, bei der das Silber/Kupfer/ Palladium-Hartlot eine möglichst rückstandfreie Zusammensetzung von 68,5 Gew.% Silber, 26,5 Gew.% Kupfer und 5 Gew.% Palladium hat.

3. Verfahren zum Herstellen einer Verbundanordnung (1; 1'; 1"; 1*; 1^{#}) durch direktes Hartverlöten einer ersten Komponente (11) aus Titan mit einer zweiten Komponente aus nichtrostendem Stahl, die die erste Komponente umspannt, unter Verwendung von Silber/Kupfer/Palladium-Hartloten,
bei welchem Verfahren
- die erste Komponente (11) aus Titan mit einem zylindrischen ersten Ende (111) versehen wird,
-- das einen kleineren Außendurchmesser als ein daran anschließender Hauptteil (112) hat,
--- dessen Mantelfläche (113) mindestens teilweise eine hartzuverlötende erste Fläche ist,
- als zweite Komponente eine zylindrische Stahlhülse (12) dient,
-- deren Innendurchmesser gleich dem Außendurchmesser des Hauptteils (112) der ersten Komponente (11) ist und
-- deren Innenmantelfläche (123) mindestens teilweise eine hartzuverlötende zweite Fläche ist,
- eine Silber/Kupfer/Palladium-Hartlotmenge (13) um das erste Ende (111) der ersten Komponente (11) gelegt wird,
- die Stahlhülse (12) auf den Hauptteil (112) der ersten Komponente aufgeschoben wird,
- die erste und die zweite Komponente sowie die Silber/Kupfer/Palladium-Hartlotmenge in einem Vakuum, einem Schutzgas oder einem Inertgas solange erhitzt werden, bis die Silber/Kupfer/Palladium-Hartlotmenge schmilzt und die hartzuverlötenden Flächen benetzt, und danach erkalten gelassen werden,
-- wodurch die Verbundanordnung entsteht.

4. Verfahren nach Anspruch 3, bei dem
- die Stahlhülse (12) ein über das erste Ende (111) der ersten Komponente (11) aus Titan vorstehendes Ende (122) aufweist,
- die erste Komponente (11) am ersten Ende (111) ein Sack-Innengewinde (116) aufweist,
- ein Rohr (14) aus nichtrostendem Stahl,
-- das einen gleichen Außendurchmesser wie der Innendurchmesser der Stahlhülse (12) hat,
- wird an einem ersten Ende (141) mit einem in das Sack-Innengewinde (116) passenden Außengewinde (142) versehen und darin eingeschraubt, und
- das vorstehende Ende (122) der Stahlhülse (12) wird mit dem Rohr (14) verschweißt.

5. Verfahren nach Anspruch 3 oder 4, bei dem der Hauptteil (112) der ersten Komponente (11) aus Titan mit einem vom ersten Ende (111) abgewandten Bund (118) versehen wird, den die Stahlhülse (12) überdeckt und der als Anschlag für sie dient.

6. Verfahren nach Anspruch 4 oder 5, bei dem
- die erste Komponente (11) aus Titan mit einer Axialbohrung (117) versehen wird, deren Durchmesser gleich dem Innendurchmesser des Rohrs (14) aus nichtrostendem Stahl ist,
- ein Titanrohr (15), dessen Außendurchmesser praktisch gleich dem Innendurchmesser des Rohrs (14) ist, in das Rohr und in die Axialbohrung eingesteckt wird und
- ein erstes Ende (151) des Titanrohrs (15) mit der ersten Komponente (11) unter einem Schutzgas elektrisch verschweißt wird.

7. Verfahren nach einem der Ansprüche 3 bis 6, bei dem als Silber/Kupfer/Palladium-Hartlot eine möglichst rückstandfreie Zusammensetzung von 68,5 Gew.% Silber, 26,5 Gew.% Kupfer und 5 Gew.% Palladium benutzt wird.

## Claims

1. Use of silver-copper-palladium brazing alloys for brazing a first component of titanium directly to a second component of stainless steel which clasps the first component tightly.

2. The use as claimed in claim 1 wherein the silver-copper-palladium brazing alloy has a composition of 86.5 wt.% silver, 26.5 wt.% copper, and 5 wt.% palladium and is as free of residues as possible.

3. A method for forming a compound arrangement (1; 1'; 1"; 1*; 1^{#}) by brazing a first component (11) of titanium directly to a second component of stainless steel which clasps the first component tightly, using silver-copper-palladium brazing alloys, wherein
- the first component (11) of titanium is provided with a cylindrical first end (111)
-- which has a smaller outside diameter than an adjacent main portion (112)
--- whose external surface (113) is, at least in part, a first surface to be brazed;
- the second component is a cylindrical steel sleeve (12)
-- whose inside diameter is equal to the outside diameter of the main portion (112) of the first component (11) and
-- whose internal surface (123) is, at least in part, a second surface to be brazed;
- a silver-copper-palladium brazing alloy (13) is placed around the first end (111) of the first component (11);
- the steel sleeve (12) is slipped over the main portion (112) of the first component; and
- the first and second components and the silver-copper-palladium brazing alloy are heated in a vacuum or an inert gas until the silver-copper-palladium brazing alloy melts and wets the surfaces to be brazed, and are then allowed to cool down;
-- whereby the compound arrangement is formed.

4. The method as claimed in claim 3 wherein
- the steel sleeve (12) has an end (122) projecting beyond the first end (111) of the first component (11) of titanium;
- the first component (11) has a tapped blind hole (116) at the first end (111);
- a tube (14) of stainless steel
-- which has an outside diameter equal to the inside diameter of the steel sleeve (12)
- is provided at a first end (141) with an external thread (142) fitting the thread of the tapped blind hole (116); and
- the projecting end (122) of the steel sleeve (12) is brazed to the tube (14).

5. The method as claimed in claim 3 or 4 wherein the main portion (112) of the first component (11) of titanium is provided with a collar (118) remote from the first end (111), said collar being covered by and serving as a stop for the steel sleeve (12).

6. The method as claimed in claim 4 or 5 wherein
- the first component (11) of titanium is provided with an axial bore (117) whose diameter is equal to the inside diameter of the tube (14) of stainless steel;
- a titanium tube (15) whose outside diameter is virtually equal to the inside diameter of the tube (14) is inserted into the tube and into the axial bore; and
- a first end (151) of the titanium tube (15) is electrically welded to the first component (11) in an inert-gas atmosphere.

7. The method as claimed in anyone of claims 3 to 6 wherein the silver-copper-palladium brazing alloy has a composition of 86.5 wt.% silver, 26.5 wt.% copper, and 5 wt.% palladium and is as free of residues as possible.

## Revendications

1. Utilisation d'une brasure d'argent/cuivre/palladium, pour le brasage direct d'un premier composant en titane sur un deuxième composant en acier inoxydable qui entoure le premier composant.

2. Utilisation selon la revendication 1, dans laquelle la brasure d'argent/cuivre/palladium possède une composition aussi exempte de résidu que possible, de 68,5% en poids d'argent, 26,5% en poids de cuivre et 5% en poids de palladium.

3. Procédé de fabrication d'un ensemble composite (1 ; 1' ; 1" ; 1* ; 1^{#}) par brasage direct d'un premier composant (11) en titane avec un deuxième composant en acier inoxydable qui entoure le premier composant, avec emploi d'une brasure d'argent/cuivre/palladium, dans lequel,
- le premier composant (11) en titane est muni d'une première extrémité cylindrique (111),
-- qui possède un diamètre extérieur plus petit que celui d'une partie principale (112) qui y fait suite,
--- dont la surface périphérique (113) est au moins partiellement une première surface à braser,
- il est prévu comme deuxième composant une douille en acier cylindrique (12),
-- dont le diamètre intérieur est égal au diamètre extérieur de la partie principale (112) du premier composant (11), et
-- dont la surface latérale intérieure (123) est au moins partiellement une deuxième surface à braser,
- une quantité de brasure d'argent/cuivre/palladium (13) est déposée autour de la première extrémité (111) du premier composant (11),
- la douille en acier (12) est emmanchée sur la partie principale (112) du premier composant,
- le premier composant et le deuxième composant ainsi que la quantité de brasure d'argent/cuivre/palladium sont chauffés dans un vide, un gaz protecteur ou un gaz inerte, suffisamment longtemps pour que la quantité de brasure d'argent/cuivre/palladium fonde et mouille les surfaces à braser, et sont ensuite laissés à refroidir,
-- de sorte qu'on obtient un ensemble composite.

4. Procédé selon la revendication 3, dans lequel
- la douille en acier (12) présente une extrémité (122) qui déborde au-delà de la première extrémité (111) du premier composant (11) en titane,
- le premier composant (11) présente, à la première extrémité (111), un filetage intérieur borgne (116),
- un tube (14) en acier inoxydable,
-- qui possède un diamètre extérieur égal au diamètre intérieur de la douille en acier (12),
- est muni, à une première extrémité (141), d'un filetage extérieur (142) qui s'ajuste dans le perçage intérieur borgne (116) et y est vissé, et
- l'extrémité débordante (122) de la douille en acier (12) est soudée au tube (14).

5. Procédé selon la revendication 3 ou 4, dans lequel la partie principale (112) du premier composant (11) en titane est munie d'une nervure (118) qui est éloignée de la première extrémité (111), et qui chevauche sur la douille en acier (12) et sert de butée pour celle-ci.

6. Procédé selon la revendication 4 ou 5, dans lequel
- le premier composant (11) en titane est muni d'un perçage axial (117) dont le diamètre est égal au diamètre intérieur du tube (14) en acier inoxydable,
- un tube en titane (15) dont le diamètre extérieur est pratiquement égal au diamètre intérieur du tube (14), est emboîté dans le tube et dans le perçage axial, et
- une première extrémité (151) du tube en titane (15) est soudée électriquement au premier composant (11) sous gaz protecteur.

7. Procédé selon une des revendications 3 à 6, dans lequel on utilise, comme brasure d'argent/cuivre/palladium, une composition aussi exempte de résidu que possible, faite de 68,5% en poids d'argent, 26,5% en poids de cuivre et 5% en poids de palladium.
